Europäisches Patentamt

European Patent Office

Office européen des brevets

(11) Veröffentlichungsnummer: **0 092 077**
**B1**

(12) ## EUROPÄISCHE PATENTSCHRIFT

(45) Veröffentlichungstag der Patentschrift:
16.09.87

(51) Int. Cl.⁴: **F 16 H 7/08,** B 65 H 16/10

(21) Anmeldenummer: **83103150.5**

(22) Anmeldetag: **30.03.83**

(54) **Antriebsvorrichtung für die Welle einer mobilen Einrichtung.**

(30) Priorität: **20.04.82 CH 2381/82**

(43) Veröffentlichungstag der Anmeldung:
**26.10.83 Patentblatt 83/43**

(45) Bekanntmachung des Hinweises auf die Patenterteilung:
**16.09.87 Patentblatt 87/38**

(84) Benannte Vertragsstaaten:
**AT BE CH DE FR GB IT LI NL SE**

(56) Entgegenhaltungen:
**GB - A - 1 517 792**
**GB - A - 1 524 822**
**US - A - 3 762 662**
**US - A - 4 150 797**

(73) Patentinhaber: **Ferag AG, CH-8340 Hinwil (CH)**

(72) Erfinder: **Leu, Willy, Hofwiesenstrasse 2,**
**CH-8330 Pfäffikon (CH)**

(74) Vertreter: **Patentanwälte Schaad, Balass & Partner,**
**Dufourstrasse 101 Postfach, CH-8034 Zürich (CH)**

**Beschreibung**

Die vorliegende Erfindung betrifft eine Vorrichtung zum Antreiben einer Welle einer mobilen Einrichtung gemäss Oberbegriff des Anspruchs 1.

Aus der US-PS 3 762 662 ist eine Vorrichtung dieser Art zum Antreiben der Welle einer Aufwickelspule für eine Gewebebahn bekannt. Auf einer von einem Antrieb angetriebenen Welle sitzt ein erstes Kettenrad, das über eine Antriebskette ein zweites Kettenrad antreibt, welches auf einer Abtriebswelle befestigt ist. Letztere ist mit einer Kupplungseinrichtung versehen, mit der die Welle der Aufwickelspule an die Abtriebswelle angekuppelt werden kann.

Zum Auswechseln einer vollen Aufwickelspule gegen eine leere Spule muss durch Betätigen der Kupplungseinrichtung die Antriebsverbindung zwischen der Abtriebswelle und der Welle der Aufwickelspule gelöst werden. Beim nachfolgenden Einsetzen einer leeren Aufwickelspule muss deren Welle zuerst in eine mit der Abtriebswelle der Antriebseinheit ausgerichtete Lage gebracht werden, bevor ein Kuppeln der beiden Wellen möglich ist.

Das Herstellen und Lösen der Antriebsverbindung zwischen der Abtriebswelle der Antriebseinheit und der Welle der Aufwickelspule erfordert daher einen entsprechenden Aufwand an Arbeit und Zeit.

Der vorliegenden Erfindung liegt nun die Aufgabe zugrunde, eine Vorrichtung der eingangs genannten Art von einfacher Bauweise zu schaffen, die es erlaubt, ohne grossen Arbeitsaufwand und auf rasche, zuverlässige und sichere Weise eine Antriebsverbindung zwischen der Antriebseinheit und der anzutreibenden Welle herzustellen und diese Antriebsverbindung wieder zu lösen.

Diese Aufgabe wird erfindungsgemäss durch die Merkmale des kennzeichnenden Teils des Anspruchs 1 gelöst.

Da die Antriebskette mit ihrer Aussenseite mit einem auf der anzutreibenden Welle sitzenden Zahnrad in Eingriff bringbar ist, vorzugsweise durch Auflegen der Antriebskette auf dieses Zahnrad, ist es möglich, die anzutreibende Welle und die Antriebskette ohne Schwierigkeiten rasch und sicher miteinander zu koppeln und wieder voneinander zu trennen. Die Spanneinrichtung sorgt dafür, dass sich die Antriebskette unter Verlängerung des Antriebstrums entlang eines Teils des Umfanges des Zahnrades an dieses anlegen kann, dass aber dieses Antriebstrum gestreckt wird und die ganze Antriebskette gespannt bleibt, sobald letztere ausser Eingriff mit dem Zahnrad gebracht wird. Die Antriebskette ist somit jederzeit wieder bereit, über das Kettenrad einer neuen Welle gelegt zu werden.

Vorzugsweise wird eine Antriebskette verwendet, die breiter ist als das Zahnrad der anzutreibenden Welle. Diese Massnahme ermöglicht auch dann ein sicheres Eingreifen der Antriebskette in das Zahnrad der anzutreibenden Welle, wenn dieses Zahnrad und die Antriebskette beim Koppeln nicht genau aufeinander ausgerichtet sind.

Bei einer weiteren bevorzugten Ausgestaltung des Erfindungsgegenstandes ist die Antriebskette zusammen mit wenigstens einem Teil der Kettenräder zwischen einer Ruhestellung und einer Antriebsstellung, in der sie in Eingriff mit dem Zahnrad der anzutreibenden Welle steht, verstellbar, vorteilhafterweise durch Verschwenken der Antriebskette. Bei einer solchen Ausführungsform kann die Antriebsverbindung zwischen der Antriebskette und dem Zahnrad der Welle automatisch und auf sichere Weise hergestellt und wieder gelöst werden.

Die erfindungsgemässe Vorrichtung eignet sich insbesondere zum Antreiben des in einem mobilen Rahmen gelagerten Wickelkernes einer Speichereinheit für flächige Erzeugnisse, insbesondere Druckprodukte.

Aus den GB-PSen 1 517 792 und 1 524 822 ist nun eine Antriebsvorrichtung bekannt, die es erlaubt, wahlweise eine Antriebsverbindung zwischen einer Antriebswelle und einer Anzahl von anzutreibenden Wellen herzustellen. Letztere sind in einer Halterung gelagert, die um eine ortsfeste, zur Antriebswelle parallele Achse schwenkbar ist. Über die anzutreibenden Wellen ist eine Antriebskette geführt, die durch Verschwenken der Halterung an den Umfang eines Kettenrades angelegt werden kann, das auf der Antriebswelle sitzt. Dabei sind Vorkehrungen getroffen, um sicherzustellen, dass beim Ankoppeln der anzutreibenden Wellen an die Antriebswelle die anfänglich stillstehende Antriebskette mit dem sich drehenden Kettenrad auf der Antriebswelle in richtigen Eingriff gebracht wird.

Die vorstehend erwähnte Vorrichtung ist somit dazu bestimmt, bei Bedarf ein einwandfreies Ankoppeln der anzutreibenden Wellen an eine einzige, drehend angetriebene Antriebswelle zu gewährleisten. Die anzutreibenden Wellen sind dabei an sich ortsfest, sieht man davon ab, dass sie zusammen mit ihrer Halterung um eine ortsfeste Achse verschwenkbar sind.

Im Gegensatz dazu soll die erfindungsgemässe Antriebsvorrichtung dazu dienen, mit einer Antriebseinheit einfacher Bauweise, die vorzugsweise ortsfest angeordnet ist, die Wellen von verschiedenen mobilen Baueinheiten und -gruppen anzutreiben, die nur zum Antreiben ihrer Welle mit der Antriebseinheit zusammengebracht werden, im übrigen aber von dieser getrennt eingesetzt werden.

Im folgenden wird an Hand der Zeichnung ein Ausführungsbeispiel des Erfindungsgegenstandes näher erläutert. Es zeigt rein schematisch:

Fig. 1 in Seitenansicht eine stationäre Antriebsstation zum Antreiben des Wickelkernes einer mobilen Speichereinheit für Druckprodukte mit der Antriebskette in Ruhestellung

Fig. 2 ebenfalls in Seitenansicht die Antriebsstation gemäss Fig. 1 mit zugestellter Speichereinheit und der Antriebskette in Antriebsstellung, und

Fig. 3 die Anordnung gemäss Fig. 2 in Ansicht in Richtung des Pfeiles A.

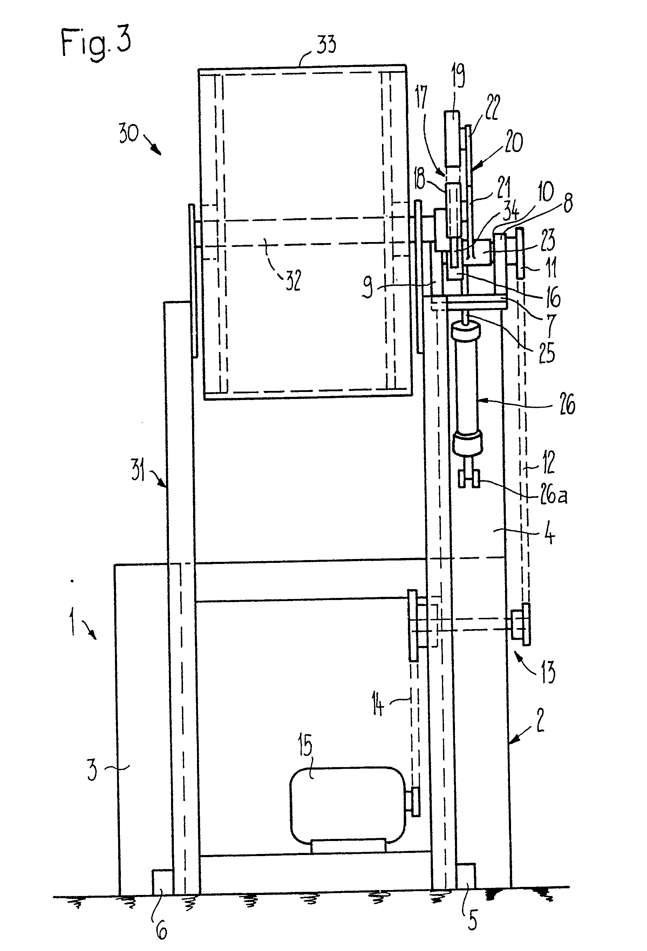

Die in den Fig. dargestellte stationäre Antriebsstation 1 weist ein Gestell 2 auf, das aus einem sich am Boden abstützenden Grundrahmen 3 und einer Tragkonstruktion 4 besteht, welche seitlich des Grundgestelles 3 angeordnet ist und sich von diesem nach oben erstreckt. Vom Grundrahmen 3 stehen zwei Führungen 5 und 6 ab, die in einem Abstand parallel zueinander verlaufen. Die Tragkonstruktion 4 weist eine Plattform 7 auf, an der zwei Lagerplatten 8 und 9 befestigt sind, die in einem Abstand und parallel zueinander verlaufen (Fig. 3). Wie diese Fig. 3 weiter zeigt, ist in diesen Lagerplatten 8 und 9 eine Welle 10 drehbar gelagert. Mit dieser Welle 10 ist ein Zahnrad 11 drehfest verbunden, das auf der Aussenseite der Lagerplatte 8 angeordnet ist. Über dieses Zahnrad 11 ist eine Kette 12, vorzugsweise eine Rollenlaschenkette, geführt, die über ein Übersetzungsgetriebe 13 und eine weitere Kette 14, die vorzugsweise ebenfalls eine Rollenlaschenkette ist, von einem im Grundrahmen 3 gelagerten Antriebsmotor 15 angetrieben wird.

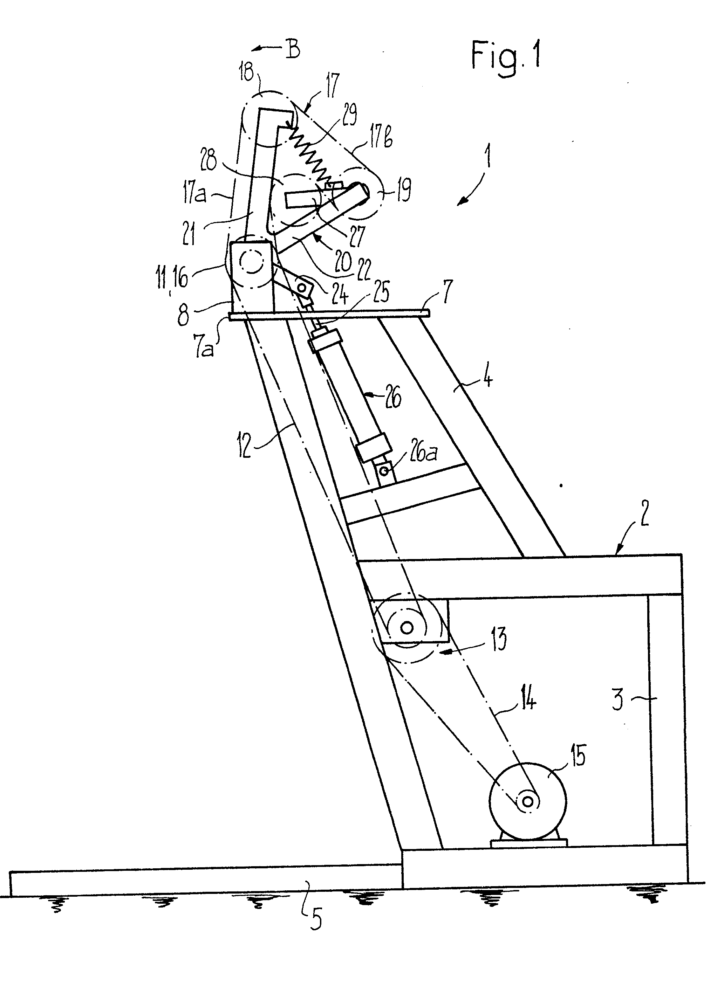

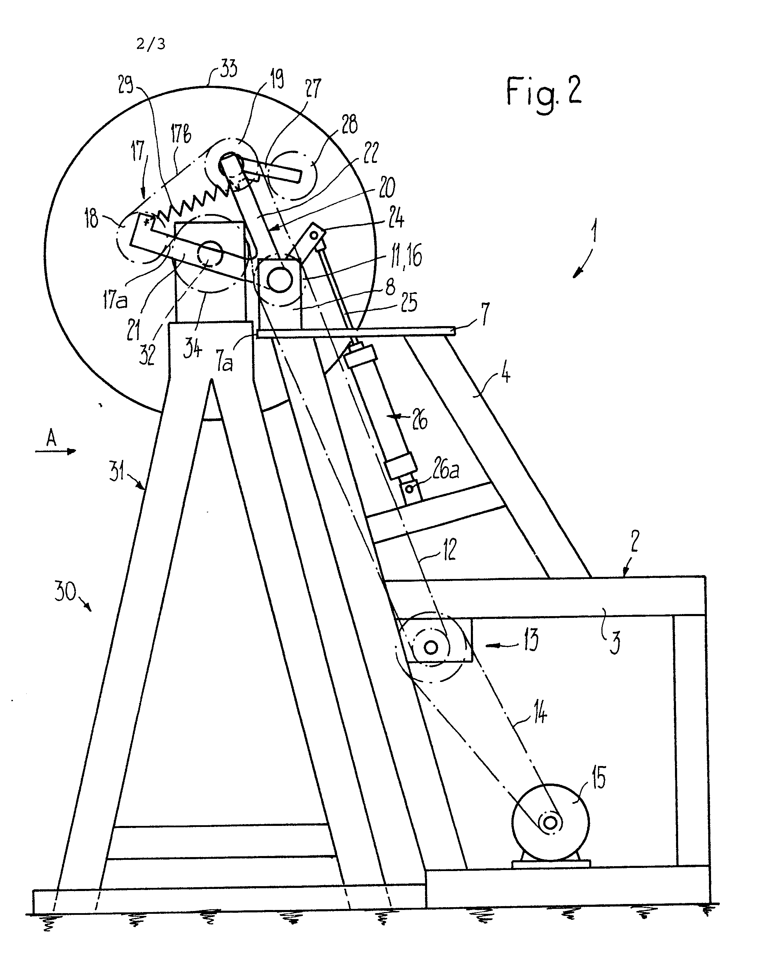

Auf der Welle 10 sitzt ein Zahnkettenrad 16, das in der Darstellung gemäss den Fig. 1 und 2 hinter dem Zahnrad 11 liegt und somit nicht sichtbar ist. Dieses Kettenrad 16 treibt eine Zahnkette 17 bekannter Bauart an, die nach beiden Seiten flexibel ist. Diese Zahnkette 17 ist ausser über das Zahnkettenrad 16 noch über zwei weitere Zahnkettenräder 18 und 19 geführt. Das Antriebstrum 17a der Zahnkette 17 liegt zwischen den Kettenrädern 16 und 18, während das zur Umlenkung dienende Kettenrad 19 im Leertrum 17b angeordnet ist. Die Zahnkettenräder 18 und 19 sind an einer Halterung 20 angebracht, die schwenkbar auf der Welle 10 gelagert ist. Diese Halterung 20 weist zwei miteinander einen Winkel bildende Haltearme 21 und 22 auf, an derem freien Ende eines der Zahnkettenräder 18 bzw. 19 drehbar gelagert ist. Die Haltearme 21 und 22 sind an einer Nabe 23 befestigt (Fig. 3), die drehbar auf der Welle 10 sitzt.

Von dieser Nabe 23 steht ein Hebel 24 ab, an dem die Kolbenstange 25 einer pneumatischen oder hydraulischen Zylinder-Kolbeneinheit 26 angreift. Letztere ist bei 26a schwenkbar an der Tragkonstruktion 4 befestigt.

Im weiteren ist eine Spanneinrichtung zum Spannen bzw. Gespannthalten der Antriebskette 17 vorhanden. Diese Spanneinrichtung weist einen Hebel 27 auf, der drehbar am Ende des das Zahnkettenrad 19 tragenden Haltearmes 22 befestigt ist. An seinem freien Ende trägt der Hebel 27 ein Spannrad 28, das auf der Aussenseite der Antriebskette 17, d.h. auf der den Zahnkettenrädern 16, 18 und 19 gegenüberliegenden Seite der Antriebskette 17, an letzterer angreift. Am Hebel 27 ist das eine Ende einer Zugfeder 29 befestigt, die am andern Ende am Haltearm 21 verankert ist. Diese Zugfeder 29 zieht den Hebel 27 und somit das Spannrad 28 gegen die Antriebskette 17, wodurch diese gespannt wird.

In den Fig. 2 und 3 ist eine Aufwickel- und Speichereinheit 30 gezeigt, welche in der deutschen Patentanmeldung P 3 236 866 näher beschrieben ist. Diese Aufwickel- und Speichereinheit 30 weist ein mobiles Gestell 31 in der Form eines Lagerbockes auf. In diesem Gestell 31 ist drehbar eine Welle 32 gelagert, auf der ein zylindrischer Wickelkern 33 sitzt. Am einen Ende der Welle 32 ist mit dieser drehfest ein Zahnkettenrad 34 verbunden. Die Bandspule mit einem aufgewickelten Wickelband, das mit dem Wickelkern 33 verbunden ist, ist in den Fig. 2 und 3 nicht gezeigt. Wie in der erwähnten deutschen Patentanmeldung P 3 236 866 ausführlich beschrieben ist, werden auf den Wickelkern 33 flächige Erzeugnisse, insbesondere Druckprodukte, aufgewickelt, die in Schuppenformation anfallen. Die stationäre Antriebsstation 1 dient nun dazu, zur Bildung eines Erzeugniswickels auf dem Wickelkern 33 diesen anzutreiben. Nach Fertigstellung eines Wickels wird auf noch zu erläuternde Weise die Antriebsverbindung zwischen Antriebseinheit und Aufwickel- und Speichereinheit 30 gelöst, und letztere wird durch eine neue Aufwickel- und Speichereinheit mit leerem Wickelkern 33 ausgetauscht. Es versteht sich jedoch dass die Antriebsstation 1 auch dazu verwendet werden kann, einen einen Erzeugniswickel tragenden Wickelkern 33 anzutreiben, um diesen Erzeugniswickel wieder abzubauen.

Im folgenden wird nun die Wirkungsweise der beschriebenen Vorrichtung erläutert.

Befindet sich die Antriebsstation 1 ausser Betrieb, so nimmt die Antriebskette 17 ihre Warte- oder Ruhestellung ein, wie das in Fig. 1 dargestellt ist. Die Kolbenstange 25 befindet sich in ihrer eingefahrenen Endlage, was bewirkt, dass die Halterung 20 hochgeschwenkt ist. In dieser Ruhestellung der Antriebskette 17 verläuft das Antriebstrum 17a im wesentlichen gradlinig, während der sich zwischen den Kettenrädern 16 und 19 befindliche Abschnitt des Leertrums 17b eine Umlenkung über das Spannrad 28 erfährt. Die Zahnkette 17 ist somit gespannt.

Mittels einer geeigneten Transporteinrichtung, z.B. eines Gabelstaplers oder Handhubwagens, wird die Aufwickel- und Speichereinheit mit der anzutreibenden Welle 32 an die Antriebsstation 1 herangebracht. Dabei dienen die Führungen 5 und 6 zur seitlichen Ausrichtung des Gestelles 31 der Aufwickel- und Speichereinheit 30, wie das Fig. 3 zeigt. Die Einheit 30 wird somit an das Gestell 2 der Antriebsstation 1 herangeschoben, bis das Gestell 31 der Einheit 30 an der Vorderfläche 7a der Plattform 7, die als Anschlag dient, anstösst. Damit wird ebenfalls eine Ausrichtung der Einheit 30 in Zubringrichtung derselben erzielt. Befindet sich nun die Aufwickel- und Speichereinheit 30 in der richtigen Position, so wird durch Betätigen der Kolben-Zylindereinheit 26 die Kolbenstange 25 ausgefahren, was ein Verschwenken der Halterung 20 in Richtung des Teiles B (Fig. 1) zur Folge hat. Im Zuge dieses Verschwenkens legt sich das Antriebstrum 17a mit seiner Aussenseite auf das Kettenrad 34 der anzutreibenden Welle 32 und umschlingt dieses Kettenrad 34 entlang eines Teiles dessen Umfanges, wie das die Fig. 2 zeigt. Das bedingt nun gegenüber der in Fig. 1 gezeigten Wartestellung eine Verlängerung des Antriebstrums 17a. Die hiefür notwendige Kettenlänge wird dadurch erhalten, dass der zwischen den Kettenrädern 16 und 19 liegende Abschnitt des Leertrums 17b gestreckt wird, wie das Fig. 2 zeigt. Dabei wird der Hebel 27 mit dem Spannrad 28 entgegen der Kraft der Feder 29 verschwenkt. Durch die nun gespannte Zugfeder 29 wird das Spannrad 28 an die Zahnkette 17 angedrückt, um so diese Antriebskette während des Antriebsvorganges genügend stark gespannt zu halten. Nun wird der Antriebsmotor 15 in Betrieb gesetzt, was zur Folge hat, dass die Zahnkette 17 durch das Zahnkettenrad 16 angetrieben wird. Die Zahnkette 17 treibt ihrerseits das Zahnkettenrad 34 und somit den Wickelkern 33 an.

Zum Lösen der Antriebsverbindung zwischen Zahnkette 17 und Kettenrad 34 wird nun durch Einfahren der Kolbenstange 25 die Halterung 20 wieder in die in Fig. 1 gezeigte Ruhestellung hochgeschwenkt. Sobald die Zahnkette 17 ausser Eingriff mit dem Kettenrad 34 gelangt, wird das Antriebstrum 17a wieder gestreckt. Diese Verkürzung des Antriebstrums 17a wird durch eine entsprechende Verlängerung des Kettenabschnittes ausgeglichen, der zwischen den Ketterädern 16 und 19 verläuft (siehe Fig. 1). Die Antriebsstation 1 ist nun zur Kopplung mit einer neuen Aufwickel- und Speichereinheit bereit.

Es muss nun sichergestellt werden, dass unter allen Bedingungen zwischen jedem Kettenrad 34 der verschiedenen Aufwickel- und Speichereinheiten 30 und der Zahnkette 17 eine richtige Antriebsverbindung hergestellt werden kann, die einwandfrei funktioniert. Um nun dieses Ziel ohne zeitaufwendige und mühsame Einstell- und Ausrichtarbeiten zu erreichen, sind bei der beschriebenen Lösung verschiedene Massnahmen getroffen worden.

Zum einen ist die Zahnkette 17 breiter als das Kettenrad 34 der anzutreibenden Welle 32, z.B. zwei bis dreimal so breit. Das erlaubt beim Hinstellen der Aufwickel- und Speichereinheit 30 eine gewisse Toleranz in Richtung der Achse der anzutreibenden Welle 32. Der Abstand zwischen den beiden Führungen 5 und 6 kann daher etwas grösser sein als die Breite des Gestelles 31 der Einheit 30, was das Einfahren dieses Gestelles 31 zwischen die Führungen 5 und 6 erleichtert.

Zum andern ermöglicht der Umstand, dass das anzutreibende Kettenrad 34 entlang eines Teils seines Umfanges von der Antriebskette 17 umschlungen wird und die Kettenspanneinrichtung 27, 28, 29 einen langen Spannweg aufweist, einen gewissen Ausgleich quer zur Achse der anzutreibenden Welle 32 in horizontaler und vertikaler Richtung. Dies bedeutet, dass ein einwandfreie Antriebsverbindung auch dann möglich ist, wenn die Wellen 32 samt den Kettenrädern 34 der verschiedenen Aufwickel- und Speichereinheiten 30 in der Höhe, nach der Seite sowie in Zustellrichtung voneinander abweichende Lagen einnehmen. Durch die beschriebene Ausbildung der Antriebsstation 1 ist es somit möglich, die Aufwickel- und Speichereinheiten 30 mittels einer geeigneten Transporteinrichtung zwischen die Führungen 5 und 6 einzuführen, bis an den Anschlag mit der Vorderfläche 7a der Plattform 7 vorzuschieben und dann abzustellen. Es sind keine weiteren Ausricht- und Anpassarbeiten erforderlich. Das Herstellen der Antriebsverbindung kann einzig durch das beschriebene Verschwenken der Halterung 20 hergestellt werden.

Abweichend von der gezeigten Ausbildung ist es auch denkbar, die Antriebskette 17 nicht zwischen einer Ruhe- und einer Antriebsstellung verschwenkbar auszubilden, sondern diese Antriebskette 17 dauernd in der Antriebsstellung gemäss Fig. 2 zu belassen. Dies bedeutet, dass das Kettenrad 34 auf der anzutreibenden Welle 32 auf geeignete Weise gegen das Arbeitstrum 17a der Antriebskette 17 eingefahren wird, so dass dieses Arbeitstrum 17a das Kettenrad 34 entlang eines Teils seines Umfanges umschlingen kann.

Es versteht sich, dass die beschriebene Vorrichtung noch in weiteren Teilen anders als wie gezeigt ausgebildet sein kann. Beispielsweise wäre es auch möglich, die Zahnkette 17 auf andere Art zwischen der Ruhe- und Arbeitsstellung zu verstellen.

Obwohl sich die vorstehend erläuterte Antriebsvorrichtung besonders für das Antreiben der Wickelkerne 33 von Aufwickel- und Speichereinheiten 30 für Druckprodukte und andere flächige Erzeugnisse eignet, ist es auch denkbar, mit dieser Antriebsvorrichtung Wellen von andersartigen mobilen Baueinheiten und -gruppen anzutreiben, die nur vorübergehend mit der Antriebsvorrichtung in Antriebsverbindung zu stehen haben. So könnten beispielsweise landwirtschaftliche Zugfahrzeuge mit einer solchen Antriebsvorrichtung versehen werden, mittels der die verschiedenen an das Zugfahrzeug ankoppelbaren Geräte angetrieben werden können.

**Patentansprüche**

1. Vorrichtung zum Antreiben einer Welle (32) einer mobilen Einrichtung (31), mit einer mit der anzutreibenden Welle (32) lösbar koppelbaren Antriebseinheit, die eine Antriebskette (17) aufweist, die auf ihrer innenliegenden Seite über wenigstens zwei Kettenräder (16, 18) geführt ist, von denen das eine Kettenrad (16) angetrieben ist, dadurch gekennzeichnet, dass die Antriebskette (17) auf ihrer aussenliegenden Seite mit einem auf der anzutreibenden Welle (32) befestigten Zahnrad (34) und letzteres entlang eines Teils seines Umfangs umschlingend in Eingriff bringbar und aus dem Eingriff mit diesem Zahnrad (34) lösbar ist und dass eine Spanneinrichtung (27, 28, 29) zum Gespannthalten der ausser Eingriff mit dem Zahnrad (34) der anzutreibenden Welle (32) stehenden Antriebskette (17) vorhanden ist.

2. Vorrichtung nach Anspruch 1, dadurch gekennzeichnet, dass die Antriebskette (17) breiter ist als das Zahnrad (34) der anzutreibenden Welle (32).

3. Vorrichtung nach Anspruch 1 oder 2, dadurch gekennzeichnet, dass das Leertrum (17b) der Antriebskette (17) über ein weiteres Kettenrad (19) geführt ist.

4. Vorrichtung nach einem der Ansprüche 1 bis 3, dadurch gekennzeichnet, dass die Spanneinrichtung (27, 28, 29) ein vorzugsweise federbelastetes Spannrad (28) aufweist, das mit dem Leertrum (17b) der Antriebskette (17) zusammenwirkt.

5. Vorrichtung nach Anspruch 4, dadurch gekennzeichnet, dass das Spannrad (28) auf der Aussenseite der Antriebskette (17) angeordnet ist.

6. Vorrichtung nach Anspruch 4 oder 5, dadurch gekennzeichnet, dass das Spannrad (28) an einem schwenkbar gelagerten Hebel (27) angeordnet ist, an dem eine das Spannrad (28) gegen die Antriebskette (17) drückende Spannanordnung, vorzugsweise eine Feder (29), angreift.

7. Vorrichtung nach einem der Ansprüche 1–6, dadurch gekennzeichnet, dass die Antriebskette (17) zusammen mit wenigstens einem Teil (18, 19) der Kettenräder (16, 18, 19) zwischen einer Ruhestellung und einer Antriebsstellung, in der sie in Eingriff mit dem Zahnrad (34) der anzutreibenden Welle (32) steht, verstellbar ist.

8. Vorrichtung nach Anspruch 7, dadurch gekennzeichnet, dass die Antriebskette (17) schwenkbar ist.

9. Vorrichtung nach Anspruch 8, dadurch gekennzeichnet, dass wenigstens ein Teil (18, 19) der Kettenräder (16, 18, 19) an einer Halterung (20) gelagert sind, die vorzugsweise um die Achse (10) des treibenden Kettenrades (16) schwenkbar ist.

10. Vorrichtung nach den Ansprüchen 4 und 9, dadurch gekennzeichnet, dass die Spannrolle (28) mit der Halterung (20) mitverschwenkbar ist.

11. Vorrichtung nach Anspruch 9, gekennzeichnet durch einen Antrieb (25, 26), vorzugsweise eine pneumatische oder hydraulische Zylinder-Kolbeneinheit, zum Schwenken der Halterung (20).

12. Vorrichtung nach einem der Ansprüche 1 bis 11, dadurch gekennzeichnet, dass die Antriebskette (17) eine vorzugsweise nach beiden Seiten flexible Zahnkette ist.

13. Vorrichtung nach einem der Ansprüche 1 bis 12, dadurch gekennzeichnet, dass die Antriebseinheit stationär ist und zum Antreiben des in einem mobilen Rahmen (31) drehbar gelagerten Wickelkerns (33) einer Speichereinheit (30) für flächige Erzeugnisse, insbesondere Druckprodukte, dient.

## Claims

1. Device for driving a shaft (32) of a mobile device (31), having a drive unit which can be detachably coupled to the shaft (32) to be driven and has a drive chain (17) which is guided on its inwardly lying side via at least two chain wheels (16, 18), of which one chaine wheel (16) is driven, characterised in that the drive chain (17), on its outwardly lying side, can be brought into engagement with a toothed whell (34), fixed to the shaft (32) to be driven, such that it loops around a part of the periphery of this toothed wheel (34) and can be disengaged from the latter, and that a tensioning device (27, 28, 29) is available for holding in tension the drive chain (17) which is disengaged from the toothed wheel (34) of the shaft (32) to be driven.

2. Device according to Claim 1, characterised in that the drive chain (17) is wider than the toothed wheel (34) of the shaft (32) to be driven.

3. Device according to Claim 1 or 2, characterised in that the slack side (17b) of the drive chain (17) is guided via a further chain wheel (19).

4. Device according to one of Claims 1 to 3, characterised in that the tensioning device (27, 28, 29) has a preferably spring-loaded tensioning wheel (28) which interacts with the slack side (17b) of the drive chain (17).

5. Device according to Claim 4, characterised in that the tensioning wheel (28) is arranged on the outer side of the drive chain (17).

6. Device according to Claim 4 or 5, characterised in that the tensioning wheel (28) is arranged on a pivotably mounted lever (27) on which a tensioning arrangement engages which presses the tensioning wheel (28) against the drive chain (17) and is preferably a spring (29).

7. Device according to one of Claims 1 to 6, characterised in that the drive chain (17), together with at least some (18, 19) of the chain wheels (16, 18, 19), can be adjusted between an inoperative position and a drive position in which it is in engagement with the toothed wheel (34) of the shaft (32) to be driven.

8. Device according to Claim 7, characterised in that the drive chain (17) is pivotable.

9. Device according to Claim 8, characterised in that at least some (18, 19) of the chain wheels (16, 18, 19) are mounted on a holder (20) which preferably can be pivoted about the axis (10) of the driving chain wheel (16).

10. Device according to Claims 4 and 9, characterised in that the tensioning roller (28) can be pivoted along with the holder (20).

11. Device according to Claim 9, characterised by a drive (25, 26), preferably a pneumatic or hydraulic cylinder-piston unit, for pivoting the holder (20).

12. Device according to one of Claims 1 to 11, characterised in that the drive chain (17) is an inverted toothed chain, preferably flexible on both sides.

13. Device according to one of Claims 1 to 12, characterised in that the drive unit is stationary and is used for driving the winding core (33) of a storage unit (30) for lamina products, in particular printed products, which winding core (33) is rotatably mounted in a mobile frame (31).

## Revendications

1. Dispositif d'entraînement d'un arbre (32) d'une machine mobile (31), comportant une unité d'entraînement dotée d'un accouplement mobile avec l'arbre (32) à entraîner et d'une chaîne motrice (17), guidée sur son côté interne sur deux pignons (16, 18) au moins, dont l'un (16) est entraîné, caractérisé en ce que la chaîne (17) peut engrener sur son côté externe avec une roue dentée (34), fixée sur l'arbre (32) et enveloppée par la chaîne sur une partie de sa circonférence, cette même chaîne (17) pouvant être désengrenée de la roue (34) précitée, et en ce qu'un dispositif de tension (27, 28, 29) permet de maintenir tendue la chaîne (17), lorsqu'elle est désengrenée de la roue dentée (34) de l'arbre (32) à entraîner.

2. Dispositif selon la revendication 1, caractérisé en ce que la chaîne (17) est plus large que la roue dentée (34) de l'arbre (32) à entraîner.

3. Dispositif selon une des revendications 1 et 2, caractérisé en ce que le brin conduit (17b) de la chaîne d'entraînement (17) est guidé sur un autre pignon (19).

4. Dispositif selon une quelconque des revendications 1 à 3, caractérisé en ce que le dispositif de tension (27, 28, 29) présente un rouleau (28), chargé par ressort de préférence et combiné au brin conduit (17b) de la chaîne d'entraînement (17).

5. Dispositif selon la revendication 4, caractérisé en ce que le roulea de tension (28) est disposé sur le côté externe de la chaîne d'entrainement (17).

6. Dispositif selon une des revendications 4 et 5, caractérisé en ce que le rouleau de tension (28) est monté sur un levier pivotant (27) attaqué par un élément de tension, un ressort de préférence (29), qui comprime le rouleau (28) contre la chaîne d'entraînement (17).

7. Dispositif selon une quelconque des revendications 1 à 6, caractérisé en ce que la chaîne (17), avec une partie au moins (18, 19) des pignons (16, 17, 18), peut se déplacer d'une position de repos dans une position d'entraînement, dans laquelle elle engrène avec la roue dentée (34) de l'arbre à entraîner (32).

8. Dispositif selon la revendication 7, caractérisé en ce que la chaîne d'entraînement (17 peut pivoter.

9. Dispositif selon la revendication 8, caractérisé en ce qu'une partie au moins (18, 19) des pignons de chaîne (16, 18, 19) est montée sur un support (20), qui peut de préférence pivoter autour de l'axe (10) du pignon moteur (16).

10. Dispositif selon les revendications 4 et 9, caractérisé en ce que le rouleau de tension (28) peut pivoter avec le support (20).

11. Dispositif selon la revendication 9, caractérisé en ce que le mouvement du support (20) est assuré par une commande (25, 26), un ensemble cylindre-piston pneumatique ou hydraulique de préférence.

12. Dispositif selon une quelconque des revendications 1 à 11, caractérisé en ce que la chaîne d'entraînement (17) est de préférence une chaîne silencieuse, flexible dans les deux sens.

13. Dispositif selon une quelconque des revendications 1 à 12, caractérisé en ce que l'unité d'entraînement, stationnaire, permet d'entraîner le moyeu de bobine rotatif (33), monté dans le cadre mobile (31) d'une unité de stockage (30) de produits plats, des imprimés notamment.

Fig.1

2/3

Fig. 2

Fig. 3